# EUROPÄISCHE PATENTSCHRIFT

(11) **EP 2 470 323 B1**
(45) Veröffentlichungstag und Bekanntmachung des Hinweises auf die Patenterteilung: **24.09.2014**
(21) Anmeldenummer: 10751890.4
(22) Anmeldetag: 24.08.2010
(51) Int. Cl.: B23K 9/095

(54) **HANDSCHWEISSGERÄT MIT EINEM GEHÄUSE, EINER AUFNAHME, EINEM KONDENSATORMODUL UND EINER SCHNITTSTELLE**
HAND-HELD WELDING TOOL COMPRISING A HOUSING, A RECEPTACLE, A CAPACITOR MODULE AND INTERFAC
PROCÉDÉ DE COMMANDE POUR UN ACCUMULATEUR ET UNE MACHINE-OUTIL PORTATIVE

(30) Priorität: 27.08.2009 DE 102009028945
(43) Veröffentlichungstag der Anmeldung: 04.07.2012
(73) Patentinhaber: HILTI Aktiengesellschaft, 9494 Schaan (LI)
(72) Erfinder: PROFUNSER, Dieter, A-6835 Zwischenwasser (AT); SCHAER, Roland, CH-9472 Grabs (CH); WIERER, Michael, A-6700 Bludenz (AT); GUT, Manuel, A-6800 Feldkirch (AT)
(74) Vertreter: Hilti Aktiengesellschaft Corporate Intellectual Property
(86) Internationale Anmeldenummer: PCT/EP2010/062318
(87) Internationale Veröffentlichungsnummer: WO 2011/023688

(56) Entgegenhaltungen:
- DE-A1- 2 614 655
- DE-A1- 2 713 288
- DE-U1- 20 006 636
- US-A1- 2007 257 084
- US-A1- 2008 053 967

## Beschreibung

Die vorliegende Erfindung betrifft ein Handschweißgerät gemäß dem Oberbegriff des Anspruchs 1. Ein teilweise tragbares Schweißgerät ist aus der US 2008 053967 A bekannt. Das bekannte Schweißgerät hat eine Pistole zum Schweißen. Über Zuleitungen ist die Pistole mit einer Batterie-Stromquelle mit einer Kapazität von 52 Amperestunden verbunden. Das Gesamtgewicht von dreißig Kilogramm und die Zuleitungen verhindern einen flexiblen Einsatz.

DE 26 14 655 A1, die als nächstliegender Stand der Technick angesehen wird, offenbart ein Bolzenschwdeißgerät, welches direkt an einer Schweißpistole eine Kondensatorbatterie enthält. Die Kondensatorbatterie stellt den Schweißstrom bereit. Die Schweißpistole ist über Leitungen mit einem Lade- und Steuergerät verbunden.

US 2007/0257084 A1 offenbart ein netzfreies Schweißgerät, welches für ein Verschweißen von Metallplatten mittels eines Lichtbogens ausgelegt ist. Der Strom für den Schweißvorgang wird von wenigstens zwei parallel geschalteten, von elektrischen Handwerkzeugmaschinen bekannten Batteriepacks bereitgestellt. Klemmen und/oder eine Schweißpistole sind über Schweißleitungen mit den Batteriepacks verbunden. Aufgrund des Gewichts ist ein Tragegurt zum Tragen des Schweißgeräts auf dem Rücken vorgeschlagen.

### OFFENBARUNG DER ERFINDUNG

Diese Aufgabe wird durch ein erfindungsgemäßes Handschweißgerät gemäß Anspruch 1 gelöst.

Das erfindungsgemäße Handschweißgerät hat ein Gehäuse, eine Aufnahme für einen Schweißbolzen oder eine Schweißelektrode, ein Kondensatormodul innerhalb des Gehäuses, ein erster Strompfad, der das Kondensatormodul mit der Aufnahme elektrisch verbindet, eine elektro-mechanische Schnittstelle an dem Gehäuse zum Befestigen eines Akkumulatormoduls an dem Gehäuse und einer zweiten Strompfad, der die elektro-mechanische Schnittstelle elektrisch mit dem Kondensatormodul verbindet. Das Akkumulatormodul aus Batterien, z.B. wiederaufladbaren Li-Ionen Batterien, wird durch Kondensatoren gepuffert. Hierdurch sind die kurzzeitig hohen Ströme für das Schweißen bereitstellbar. Das Kondensatormodul wird nach dem Schweißen wieder durch das Akkumulatormodul aufgeladen.

Erfindungsgemäß ist in den ersten Strompfad eine Induktivität geschaltet. Der sehr kompakte, handhabbare Aufbau führt zu vorteilhaft kurzen Zuleitungen gegenüber den teilweise mehrere Meter langen Zuleitungen zwischen einer Stromquelle und einer Schweißpistole. Die führt allerdings auch zu sehr kurzen Entladezeiten. Untersuchungen zeigten, dass eine Schweißzeit von 0,2 ms bis 20 ms, vorzugsweise 0,5 ms bis 5 ms eingehalten werden sollte. Die zusätzliche Induktivität im Bereich von 0,5 bis 5 MicroHenry, gemäß der Erfindung in dem ersten Strompfad verlängert die Entladezeit in gewünschter Weise. In einer besonderen Ausgestaltung ist die Induktivität einstellbar. Ein Anwender oder eine Regelungseinrichtung passt die Induktivität an, bis ein optimales Schweißergebnis erreicht wird. Als Steuerungsgröße kann der Stromfluss durch die Schweißstelle beobachtet werden.

Eine Ausgestaltung sieht vor, dass wenigstens ein Abstandshalter neben der Aufnahme an dem Gehäuse angeordnet ist und in dem Abstandshalter eine Stromrückführung integriert ist. Eine Ausgestaltung ist dadurch gekennzeichnet, dass ein Sensor zum Bestimmen eines Anpressdrucks und/oder Anpresswegs der Aufnahme an einen Untergrund vorgesehen ist. Eine Ausgestaltung ist dadurch gekennzeichnet, dass eine Steuerungseinrichtung zum Steuern des Handschweißgeräts in Abhängigkeit wenigstens des Anpressdrucks oder des Anpresswegs vorgesehen ist.

### KURZE BESCHREIBUNG DER FIGUREN

Die nachfolgende Beschreibung erläutert die Erfindung anhand von exemplarischen Ausführungsformen und Figuren. In den Figuren zeigen:

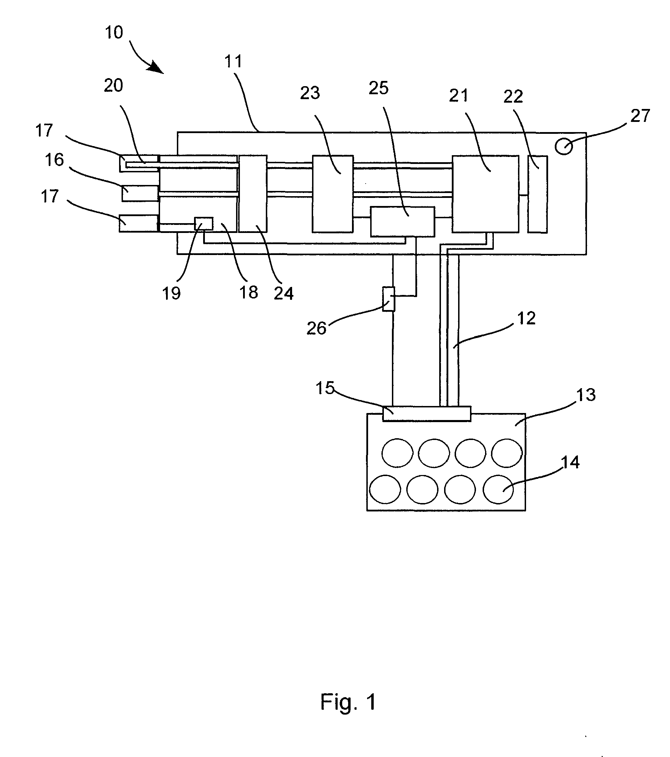

Fig. 1 ein tragbares Schweißgerät.

### AUSFÜHRUNGSFORMEN DER ERFINDUNG

Fig. 1 zeigt ein Schweißgerät 10. Ein Gehäuse 11 des Schweißgeräts 10 weist einen Handgriff 12 zum Halten des Schweißgeräts 10 auf. An dem Gehäuse 11, z.B. an dem Handgriff 12, ist ein Akkumulatormodul 13 lösbar befestigt.

Das Akkumulatormodul 13 dient als primäre Energiequelle für das Schweißgerät 10. Das Akkumulatormodul 13 kann mehrere elektrisch ladbare Akkumulatorzellen 14 beinhalten.

Die Akkumulatorzellen 14 können z.B. Lithium-Ionen, Lithium-Polymer, Nickel-Cadmium Zellen oder andere geeignete elektrische Energiespeicher basierend auf einer chemischen Redoxreaktion sein.

Das Akkumulatormodul 13 ist mit dem Handgriff 12 oder dem Gehäuse 11 vorzugsweise starr verbunden. Das Schweißgerät 10 kann während des Schweißens von einem Anwender zusammen mit dem Akkumulatormodul 13 gehalten werden. Ein Nachführen eines Kabels von einer Netzanschluss oder einer anderen stationären Energiequelle ist nicht erforderlich. Vorteilhafterweise ist ein Befestigungsmechanismus 15 vorgesehen, der ein wiederholtes Lösen und Befestigen des Akkumulatormoduls 13 an dem Gehäuse 11 ermöglicht. Der Befestigungsmechanismus 15 dient zugleich auch als elektrische Schnittstelle.

Das Schweißgerät 10 weist eine Aufnahme 16 für einen Schweißbolzen auf. Der Schweißbolzen kann in die Aufnahme 16 eingesetzt werden. Während des Schweißens läuft ein hoher elektrischer Strom über die Aufnahme 16 durch den Schweißbolzen in einen Untergrund. Der Strom und die Strommenge werden derart ausreichend dimensioniert, dass der Schweißbolzen mit dem Untergrund verschweißt wird. Der Anwender zieht nach dem Schweißvorgang das Schweißgerät 10 von dem Untergrund ab, und löst dabei den an den Untergrund angeschweißten Schweißbolzen aus der Aufnahme 16 heraus.

Um die Aufnahme 16 sind drei oder mehrere Abstandshalter 17 angeordnet. Die Abstandshalter 17 sind in einer Halterung 18 gegen eine Federkraft axial beweglich aufgehängt. Beim Anpressen des Schweißgeräts 10 gegen den Untergrund werden die Abstandshalter 17 in die Halterung 18 hineingedrückt. Ein Sensor 19 kann die Position oder die Anpresskraft der Abstandshalter 17 bestimmen.

Die Aufnahme 16 für den Schweißbolzen kann gleich den Abstandshaltern 17 in der Halterung 18 gegen eine Federkraft axial verschiebbar sein. In einer Ausgestaltung sind die Aufnahme 16 und die einzelnen Abstandshalter 17 individuell, oder die Aufnahme 16 gegenüber den Abstandshaltern 17 unabhängig aufgehängt. Es können entsprechend mehrere Sensoren 19 vorgesehen werden.

Wenigstens einer der Abstandshalter 17 kann mit einer Stromrückführung 20 versehen sein. Der Abstandshalter 17 ist vorzugsweise aus einem leitfähigen Material, z.B. Wolfram hergestellt. Eine Oberfläche des Abstandshalters 17 kann mit Wolfram beschichtet sein. Die Stromrückführung 20 verbinden den Abstandshalter 17 mit nachfolgend erläuterten Elektronikkomponenten.

Die primäre Energiequelle muss eine ausreichende Spannung bereitstellen, um einen elektrischen Strom zum Schweißen durch den Schweißbolzen zu treiben. Die Spannung muss unter Anderem einen Spannungsabfall aufgrund des Stromflusses in dem Untergrund überwinden. Durch die nahe Anordnung der Stromrückführung in den Abstandshaltern 17 bleibt der Spannungsabfalls vorteilhafterweise gering. Zugleich verhindert der definierte radiale Abstand von Abstandshaltern 17 zu der Aufnahme 16, dass Leckströme unmittelbar unter Umgehung des Schweißbolzens fließen können.

Die Aufnahme 16 und die Stromrückführung 20 sind nicht unmittelbar mit der primären Energiequelle 13 verbunden. Ein elektrisches Kondensatormodul 21 ist in den elektrischen Pfad zwischengeschaltet. Das elektrische Kondensatormodul 21 kann mehrere elektrische Kondensatoren mit jeweils zwei durch ein Dielektrikum getrennte Elektroden, z.B. Elektrolytkondensatoren, aufweisen.

Das Kondensatormodul 21 wird durch das Akkumulatormodul 13 aufgeladen. Eine Ladeelektronik 22 kann den Ladevorgang überwachen. Die Ladeelektronik 22 führt dem Kondensatormodul 21 vorzugsweise genau die Energiemenge zu, welche zum Schweißen eines Schweißbolzens notwendig ist.

Eine Schalteinrichtung 23 ist in den Strompfad zwischen das Kondensatormodul 21 und die Aufnahme 16 und/oder die Stromrückführung 20 geschaltet. In der Schalteinrichtung 23 kann ein Schalter aus ein oder mehreren Halbleiterbauelementen, z.B. Feldeffekttransistoren, Thyristoren realisiert sein. Zudem können in der Schalteinrichtung 23 Schutzelemente wie Freilaufdioden, Sicherungen etc. angeordnet sein.

Der Strompfad wird vorteilhafterweise mit sehr geringen ohmschen Widerständen ausgebildet, um die damit einhergehenden Verluste gering zu halten. Leitungen des Strompfades innerhalb des Schweißgeräts 10 können aus zu großem Querschnitt gebündelten Kupferlitzen hergestellt werden. Aufgrund des geringen ohmschen Widerstands und der geringen Induktivität entlädt sich das Kondensatormodul 21 sehr schnell. Es zeigt sich, dass ein effizienteres Schweißverhalten erhalten wird, wenn die Energie des Kondensatormoduls 21 über eine Dauer von 0,5 ms bis 5 ms abgegeben wird. Der Schweißbolzen erhitzt sich dann ausreichend für eine Befestigung. Die Dauer kann von der Masse, Geometrie des Schweißbolzens und dem Untergrund abhängig sein.

In den Strompfad zwischen das Kondensatormodul 21 und die die Aufnahme 16 und/oder die Stromrückführung 20 ist gemäß der Erfindung eine Induktivität 24 geschaltet. Die Induktivität 24 weist gemäß der Erfindung wenigstens 0,5 µH (Microhenry) auf. Die Induktivität 24 kann beispielsweise durch eine gewickelte Spule erzeugt werden. Die Induktivität 24 begrenzt die Anstiegsgeschwindigkeit des Stroms durch die Leitungen in dem Schweißgerät 10. Die Abgabe der Energie aus dem Kondensatormodul 21 wird somit verzögert. Ein Vergrößern der Induktivität 24 erhöht die Dauer der Energieabgabe.

Eine Ausgestaltung sieht vor, dass die Induktivität 24 einstellbar ist. Die Spule kann dazu relativ zu einem Ferritkern mechanisch verschoben werden. Der einstellbare Bereich der Induktivität 24 liegt gemäß der Erfindung in einem Bereich von 0,5 µH bis 5µH. Eine andere Ausgestaltung sieht vor, dass ein Abgriff entlang der Spule verschiebbar ist, um die Anzahl der Windungen und darüber die Induktivität 24 einzustellen.

Eine Steuerungseinrichtung 25 kommuniziert mit einem Systemschalter 26. Nachdem ein Anwender den Systemschalter 26 betätigt, prüft die Steuerungseinrichtung 25, ob ein in die Aufnahme 16 eingesetzter Schweißbolzen verschweißt werden kann. Die Steuerungseinrichtung 25 kann dazu den Ladezustand des Kondensatormoduls 21 prüfen. Ferner kann die Steuerungseinrichtung 25 den Anpressdruck der Abstandshalter 17 an den Untergrund von dem Sensor 19 abfragen. Sobald der Anpressdruck einen Sollwert erreicht oder übersteigt, gibt die Steuerungseinrichtung 25 ein Steuersignal an die Schalteinrichtung 23 aus. Die Schalteinrichtung 23 schaltet ansprechend auf das Steuersignal die Schaltelemente leitend, so dass ein Strom von dem Kondensatormodul 21 durch die Aufnahme 16 und zurück durch die Stromrückführungen 20 fließt.

Ein zusätzlicher Masseanschluss 27 kann an dem Gehäuse 2 vorgesehen werden. Der Masserückschluss 27 kann als erweiterte Stromrückführung verwendet werden.

## Patentansprüche

1. Handschweißgerät mit
einem Gehäuse (11),
einer Aufnahme (16) für einen Schweißbolzen oder eine Schweißelektrode,
einem Kondensatormodul (21) innerhalb des Gehäuses (11),
einem ersten Strompfad, der das Kondensatormodul (21) mit der Aufnahme (16) elektrisch verbindet,
einem zweiten Strompfad, der die elektro-mechanische Schnittstelle (15) elektrisch mit dem Kondensatormodul (21) verbindet, **gekennzeichnet durch**
eine elektro-mechanische Schnittstelle (15) an dem Gehäuse (11) zum Befestigen eines Akkumulatormoduls (13) an dem Gehäuse (11) und
eine in den ersten Strompfad geschaltete Induktivität (24) und die Induktivität (24) zwischen 0,5 µH und 5 µH groß ist.

2. Handschweißgerät nach Anspruch 1, **dadurch gekennzeichnet, dass** die Induktivität (24) einstellbar ist.

3. Handschweißgerät nach einem Ansprüche 1 oder 2, **dadurch gekennzeichnet, dass** wenigstens ein Abstandshalter (17) neben der Aufnahme (16) an dem Gehäuse (11) angeordnet ist und in dem Abstandshalter (17) eine Stromrückführung (20) integriert ist.

4. Handschweißgerät nach einem der vorhergehenden Ansprüche, **dadurch gekennzeichnet, dass** ein Sensor (19) zum Bestimmen eines Anpressdrucks und/oder Anpresswegs der Aufnahme an einen Untergrund vorgesehen ist.

5. Handschweißgerät nach Anspruch 4, **dadurch gekennzeichnet, dass** eine Steuerungseinrichtung (25) zum Steuern des Handschweißgeräts in Abhängigkeit wenigstens des Anpressdrucks oder des Anpresswegs vorgesehen ist.

## Claims

1. Hand welding equipment with
a housing (11),
a holder (16) for a welding stud or a welding electrode,
a condenser module (21) inside the housing (11),
a first current path, which connects the condenser module (21) electrically with the holder (16),
a second current path, which connects the electromechanical interface (15) electrically with the condenser module (21), **characterized by**
an electromechanical interface (15) on the housing (11) for fastening an accumulator module (13) to the housing (11) and
an inductive resistor (24) connected in the first current path and the inductive resistor (24) is between 0.5 µH and 5 µH.

2. Hand welding equipment according to claim 1, **characterized in that** the inductive resistor (24) is adjustable.

3. Hand welding equipment according to claims 1 or 2, **characterized in that** at least one distance piece (17) is arranged on the housing (11) near the holder (16) and a return line (20) is incorporated in the distance piece (17).

4. Hand welding equipment according one of the previous claims, **characterized in that** a sensor (19) is provided for determining a contact pressure and/or path of the holder on the base.

5. Hand welding equipment according to claim 4, **characterized in that** a control device (25) is provided for controlling the hand welding equipment depending on at least the contact pressure or path.

## Revendications

1. Appareil de soudage à main, comportant :
un boîtier (11),
un logement (16) pour un goujon de soudage ou une électrode de soudage,
un module de condensateur (21) à l'intérieur du boîtier (11),
un premier trajet de courant qui relie électriquement le module de condensateur (21) au logement (16),
un second trajet de courant qui relie électriquement l'interface électromécanique (15) au module de condensateur (21), **caractérisé par**
une interface électromécanique (15) sur le boîtier (11) pour fixer un module d'accumulateur (13) sur le boîtier (11) et
une inductance (24) montée dans le premier trajet de courant et la valeur de l'inductance (24) étant comprise entre 0,5 µH et 5 µH.

2. Appareil de soudage à main selon la revendication 1, **caractérisé en ce que** l'inductance (24) est réglable.

3. Appareil de soudage à main selon l'une des revendications 1 ou 2, **caractérisé en ce qu'**au moins une entretoise d'écartement (17) est agencée sur le boîtier (11) à côté du logement (16) et un retour de courant (20) est intégré dans l'entretoise d'écartement (17).

4. Appareil de soudage à main selon l'une des revendications précédentes, **caractérisé en ce qu'**un capteur (19) est prévu pour déterminer une pression d'appui et/ou une course d'appui du logement sur une surface sous-jacente.

5. Appareil de soudage à main selon la revendication 4, **caractérisé en ce que** des moyens de commande (25) pour commander l'appareil de soudage à main en fonction d'au moins la pression d'appui ou de la course d'appui sont prévus.
